# EUROPÄISCHE PATENTSCHRIFT

(11) **EP 1 649 771 B1**
(45) Veröffentlichungstag und Bekanntmachung des Hinweises auf die Patenterteilung: **05.03.2008**
(21) Anmeldenummer: 05109929.9
(22) Anmeldetag: 25.10.2005
(51) Int. Cl.: A43B 17/14, B32B 5/06, B32B 5/18, B32B 5/22

(54) **Elektrisch leitfähige Laminate aus Vliesen und einer elastischen Dämmschicht**
Electroconductive laminate, particularly insole, and a process for producing the same
Stratifié électroconducteur, notamment semelle intérieure, et son procédé de fabrication

(30) Priorität: 25.10.2004 DE 102004051929
(43) Veröffentlichungstag der Anmeldung: 26.04.2006
(73) Patentinhaber: Trocellen GmbH, 53840 Troisdorf (DE)
(72) Erfinder: Kautz, Rudolf, 53721 Siegburg (DE)
(74) Vertreter: Wübken, Ludger

(56) Entgegenhaltungen:
- EP-A- 0 081 070
- WO-A-97/19608
- US-A- 4 649 014
- US-A1- 2002 081 407
- PATENT ABSTRACTS OF JAPAN Bd. 2002, Nr. 12, 12. Dezember 2002 (2002-12-12) & JP 2002 223805 A (ACHILLES CORP), 13. August 2002 (2002-08-13)

## Beschreibung

Die vorliegende Erfindung betrifft elektrisch leitfähiges Laminat, das insbesondere zur Herstellung von Einlegesohlen für Schuhe geeignet ist, und ein Verfahren zur Herstellung dieser Laminate bzw. Einlegesohlen.

### Technisches Gebiet

In vielen industriellen Produktionsanlagen muss eine Funkenbildung bzw. die elektrostatische Aufladung von Personen weitgehend vermieden werden. Hierzu zählen Anlagen, in denen mit brennbaren oder explosiven Stoffen gearbeitet wird sowie Produktionsstätten für gegenüber elektrischen Feldern äußerst empfindlichen Halbleiterbausteinen. Es muss hier dafür Sorge getragen werden, dass sich die beschäftigten Personen elektrostatisch nicht aufladen können, bzw. solche Ladungen rasch abfließen können. Zu diesem Zweck werden Schuhe und/oder Bodenbeläge mit einer ausreichenden elektrischen Leitfähigkeit benötigt.

### Stand der Technik

Es ist bekannt, die elektrostatische Aufladung einer Person durch geeignetes Schuhwerk zu verhindern. Hierzu werden in der Regel Schuhsohlen aus leitfähigem Kunststoffmaterial sowie geeignete Einlegesohlen, die eine elektrische Verbindung zwischen Fuß und Schuhsohle herstellen, eingesetzt. Diese Einlegesohlen müssen einerseits eine ausreichende Leitfähigkeit, und andererseits - da es sich meist um Arbeitskleidung handelt - einen guten Komfort bieten.

Aus der EP 0 081 070 B2 ist eine Schuheinlage aus geschlossenzellig geschäumtem, vernetztem Polyolefin mit einer Unterschicht und einer Oberschicht, die jeweils Fasern enthalten, bekannt. Die einzelnen Schichten sind miteinander vernadelt, um einen besseren Feuchtigkeitstransport von der Ober- zur Unterseite zu gewährleisten. Bei Erwärmung oberhalb von etwa 130° C schrumpfen diese Laminate sehr stark, so dass eine Thermoverformung des geschlossenzellig geschäumten Polyolefinkörpers zur Anpassung an die Fußform ausscheidet. Die Schuheinlage ist nicht elektrisch leitfähig.

Aus der DE 297 01 276 U1 ist eine leitfähige Einlegesohle mit einer faserhaltigen, elektrisch leitfähigen Unterschicht, einer Aktivkohleschicht sowie einer offenzelligen Schicht aus Polyurethanschaum bekannt. Solche offenporigen Schäume besitzen jedoch keine genügende Eigensteifigkeit, um eine wirksame Polsterung beim Gehen zu bewirken. Weiterhin saugen sich die offenporigen Schichten dieser Einlegesohle schnell mit Fußschweiß voll, was den Tragekomfort erheblich beeinträchtigt.

Elektrisch leitfähige Einlegesohlen sind z. B. in EP 0 862 373 B1 offenbart. Die hier beschriebenen Einlegesohlen bestehen aus einem elastischen Schaummaterial, das mit einer unteren Fasermatte, die elektrisch leitfähige Fasern enthält, vernadelt wird. Hierbei treten elektrisch leitfähige Fasern aus der unteren Fasermatte durch den Schaumstoff und können so eine elektrisch leitfähige Verbindung zwischen Sohle und Fuß herstellen. Für einen verbesserten Tragekomfort weisen diese Einlegesohlen optional eine zusätzliche obere Gewebeschicht auf, die entweder zusammen mit der unteren Fasermatte und dem elastischen Schaummaterial vernadelt oder auf dieses aufgeklebt wird. Zusätzlich weisen die hier beschriebenen Einlegesohlen eine Zone besonderer Festigkeit auf, die z. B. durch Imprägnieren der unteren Fasermatte mit einer Latexdispersion hergestellt werden kann.

Aus der gattungsgemäßen DE 90 10 534 U1 ist ein antistatisches Fußbett bekannt, mit einem formgebenden Unterbau aus geschäumtem, thermoplastischem Kunststoff, auf dessen Ober- und ggf. Unterseite ein textiles Vlies vernadelt ist, und wobei eine Steppnaht aus elektrisch leitfähigem Faden angebracht ist. Das Aufbringen der Steppnaht kann erst am ausgestanzten, quasi fertigen Fußbett vorgenommen werden, was naturgemäß mit erheblichem Aufwand verbunden ist.

### Aufgabe

Aufgabe der vorliegenden Erfindung ist es, elektrisch leitfähige Laminate, die insbesondere zur rationellen Herstellung von Einlegesohlen geeignet sind, sowie daraus hergestellte Einlegesohlen bereitzustellen, wobei die Einlegesohlen der Fußform angepasst werden können, eine ausreichende Elastizität aufweisen und schrumpfarm sind.

### Darstellung der Erfindung

Gegenstand der vorliegenden Erfindung ist ein elektrisch leitfähiges Laminat, umfassend eine erste Schicht, enthaltend elektrisch leitfähige Fasern, eine zweite Fasern enthaltende Schicht und eine zwischen der ersten und der zweiten Schicht angeordnete elastische Dämmschicht aus vernetztem Polyolefinschaum. Die erste Schicht ist durch die elastische Dämmschicht mit der zweiten Schicht vernadelt, wobei elektrisch leitende Fasern die elastische Dämmschicht durchdringen. Die mittlere Vernadelungsdichte beträgt 20 - 50 Stiche pro cm² und ist damit wesentlich geringer als bei üblicher Vernadelung.

Die mittlere Dämmschicht besteht aus vernetztem, geschlossenzelligem Polyolefinschaum, bevorzugt Polyethylenschaum. Als geschlossenzellig wird ein Schaum angesehen, der mehr als 50 % geschlossene Zellen aufweist. Beim Vernadeln werden naturgemäß einige der Zellen mechanisch zerstört. Es ist daher erfindungswesentlich, dass die mittlere Vernadelungsdichte mit 20 - 50 Stichen pro cm² relativ gering ist. Es hat sich nämlich herausgestellt, dass das Schrumpfen des Polyolefinschaums entscheidend verringert wird, wenn die Anzahl der mechanisch beschädigten Zellen so gering wie möglich ist. Soweit die mittlere Vernadelungsdichte wesentlich über 50 Stiche pro cm² hinausgeht, steigt der Schrumpf bei der späteren thermoplastischen Verformung der mittleren Schicht auf unakzeptable Werte oberhalb von 20 % linear an. Soweit die Vernadelungsdichte wesentlich unter 20 Stichen pro cm² abfällt, ist eine ausreichende Verbindung bzw. Haftung zwischen Unterschicht und dem Schaumstoff nicht mehr gewährleistet.

Der Anteil der geschlossenen Zellen im vernetzten, geschlossenzelligen Polyolefinschaum nach der Vernadelung beträgt bevorzugt mehr als 70 %, der Anteil der bei der Vernadelung zerstörten Zellen beträgt somit bovorzugt weniger als 30 %.

Nach einer bevorzugten Ausführungsform der Erfindung wird physikalisch vernetzter Polyethylenschaumstoff einer Dicke von 3 bis 10 mm, bevorzugt 6 bis 8 mm, und einer Dichte - vor der thermoplastischen Verformung - von 50 bis 125 kg/m³, bevorzugt 60 bis 90 kg/m³ eingesetzt, wobei die mittlere Größe der Zellen - Durchmesser einer gedachten Kugel gleichen Volumens - kleiner als 0,5 mm, bevorzugt kleiner 0,4 mm ist. Je kleiner die mittlere Zellgröße ist, desto höher kann die Vernadelungsdichte gewählt werden, ohne das Schrumpfverhalten wesentlich zu verschlechtern.

Alternativ kann hierzu auch so genannter Polyethylen-Blockschaum, ein diskontinuierlich in Blockform hergestellter chemisch vernetzter Schaumstoff, eingesetzt werden, der ebenfalls eine sehr feine Zellstruktur aufweist. Chemisch vernetzter, in Bahnenform hergestellter Polyethylenschaumstoff ist wegen der größeren Zellen weniger gut geeignet.

Bevorzugt wird ein Schaumstoff eingesetzt, der vor der Vernadelung wenigstens 80 %, insbesondere mehr als 90 % geschlossene Zellen aufweist.

Zumindest die untere faserhaltige Schicht besitzt zumindest anteilig elektrisch leitfähige Fasern. Bevorzugt wird ein Vlies eingesetzt mit einem Anteil an elektrisch leitfähigen Fasern von 0,1 bis 25 Gew.%, bevorzugt 1 bis 5 Gew.%.

Als elektrisch leitfähige Fasern werden bevorzugt kohlenstoffhaltige Fasern, insbesondere Kohlenstoff-ummantelte Kunststofffasern, eingesetzt. Kohlenstoffhaltige Fasern im Sinne der vorliegenden Erfindung sind solche Fasern, denen entweder bei der Herstellung Kohlenstoff beigemischt wurde oder die mit Kohlenstoff (z. B. Graphit oder Ruß) ummantelt wurden. Der Kohlenstoffanteil der Fasern muss ausreichend hoch sein, um eine Leitfähigkeit der Fasern zu garantieren. Die kohlenstoffhaltigen Fasern enthalten neben dem Kohlenstoff z. B. Polyethylen, Polypropylen, Polystyrol, Polyamid, Polyester und/oder Polyurethan jeweils als Homopolymer, Copolymer oder als Polymerblend. Bevorzugt wird ein Polymer als Basis eingesetzt, dessen Schmelztemperatur über der Temperatur liegt, die für die thermoplastische Verformung des vernetzten, geschlossenzelligen Polyolefinschaums notwendig ist, damit bei der thermoplastischen Verformung die Faserstruktur des Vlieses erhalten bleibt.

Die erfindungsgemäßen Laminate besitzen eine für elektrisch leitfähige Einlegesohlen ausreichende elektrische Leitfähigkeit, kombiniert mit einer vorzugsweise atmungsaktiven, feuchtigkeitsableitenden und ästhetisch ansprechenden Oberseite. Der Durchgangswiderstand der erfindungsgemäßen Laminate bzw. Einlegesohlen nach DIN EN 344-1 beträgt vorzugsweise 10⁴ bis 10⁸ Ω, besonders bevorzugt von 10⁴ - 10⁵ Ω.

Für die Herstellung einer erfindungsgemäßen Einlegesohle wird bevorzugt zunächst eine dreischichtige Endlosbahn mit einer Unterschicht aus einem vliesartigen Fasergemisch, einer mittleren Schicht aus vernetztem feinzelligem Polyethylenschaum und einer Vliesschicht als obere Abdeckung hergestellt. Hierzu wird zunächst die obere Vliesschicht durch Flammkaschieren mit der elastischen Dämmschicht aus vernetztem Polyethylenschaum durch dem Fachmann bekanntes Flammkaschieren verbunden. Diese zweischichtige Endlosbahn wird anschließend mit einer bahnförmigen Schüttung eines Fasergemisches zusammengeführt und in mehreren Schritten vernadelt, wobei Faserbündel aus der Unterschicht durch die elastische Zwischenschicht aus Polyethylen-Schaumstoff bis in die Oberschicht gezogen werden. Die Vernadelung erfolgt dabei derart, dass je cm² 20 bis 50 Stiche erfolgen. Durch diese Vernadelung wird die anfänglich lose Faserschüttung der Unterseite vliesartig verdichtet. Es reicht dabei aus, dass nur ein bestimmter Anteil der Fasern der Unterschicht elektrisch leitfähig ist, da bei jedem Nadelvorgang eine größere Anzahl von Fasern in einem Büschel durch die Polyethylen-Schaum-Schicht gezogen wird, so dass statistisch genügend leitfähige Fasern den Schaumstoff durchdringen. Es ist hierbei von Vorteil, wenn das obere Vliesmaterial selbst leitfähig ist, es sind jedoch auch Ausführungsformen denkbar, bei denen allein durch die Vernadelung eine ausreichende Leitfähigkeit erzeugt werden kann.

Nach einer bevorzugten Ausführung der Erfindung wird im Anschluss daran das dreischichtige Laminat durch Infrarotstrahlung von beiden Seiten erwärmt, wobei der Kern der elastischen Dämmschicht bis zur für eine Thermoverformung notwendigen Temperatur, bei vernetztem Polyethylenschaum etwa 150° C, erwärmt wird. Anschließend erfolgt eine Verpressung des dreischichtigen Laminats mittels Matrizen/Patrizen derart, dass entsprechend der gewünschten anatomisch geformten Fußbett-Form bestimmte Bereiche der späteren Einlegesohle stärker - insbesondere der Fersen- und Ballenbereich - und andere Bereiche weniger stark - insbesondere der Pelottenbereich zur Stützung des Mittelfußgewölbes - komprimiert werden. Bevorzugt wird der Randbereich der Einlegesohle dabei bis zur kompakten Form verpresst und im Fersenbereich zu einer Stützform nach oben gezogen.

Abschließend werden die so in die Endlosbahn eingeformten Einlegesohlen in dem Fachmann bekannter Weise ausgestanzt oder ausgeschnitten.

Bedingt durch die geringe Anzahl der Vernadelungsstiche schrumpft das dreischichtige Laminat bei der Erwärmung auf die für die thermoplastische Verformung notwendige Temperatur nur sehr wenig, typischerweise etwa 5 bis 10 % in Querrichtung und - bedingt durch den natürlichen Schrumpf des Schaumstoffs in Längsrichtung - 10 bis 15 % in Längsrichtung. Vergleichsversuche haben ergeben, dass bei sonst gleichem Material bei einer Vernadelungsdichte von 100 Stichen je cm² ein Schrumpf von mehr als 40 % in beiden Richtungen zu erwarten ist.

Die erfindungsgemäßen Laminate weisen trotz der geringen Vernadelungsdichte einen ausreichenden elektrischen Durchgangswiderstand bei guter Elastizität bzw. Rückstellvermögen der elastischen Dämmschicht 2 auf. Die mittlere Vernadelungsdichte beträgt bevorzugt 35 bis 45, insbesondere 38 bis 42 Stiche pro cm².

Die Bestimmung der mittleren Vernadelungsdichte erfolgt durch Auszählen der Stiche pro Flächeneinheit unter einem Mikroskop. Um eine ausreichende statistische Grundlage zu erhalten, sollten mindestens fünf Flächeneinheiten einer Mindestgröße von 1 cm² ausgezählt werden. Die mittlere Vernadelungsdichte wird durch den Mittelwert der Ergebnisse, bezogen auf die Fläche, berechnet.

Im Querschnitt der wie vorstehend hergestellten Einlegesohle erkennt man, dass an den Stellen, an denen die Fasern durch die Vernadelung den Schaumstoff durchdringen, eine eng begrenzte Schrumpfung in Dickenrichtung des Schaumes stattgefunden hat. Dies führt zu einer gewissen Profilierung des Endproduktes genau an den Vernadelungsstellen. Diese bei Vergrößerung sichtbaren Einfallstellen im Bereich der Vernadelungen führen gleichzeitig dazu, dass die elektrisch leitfähigen Fasern mechanisch vor Abrasion geschützt sind, was der Haltbarkeit des Endproduktes positiv zugute kommt.

Nach einer besonders bevorzugten Variante des erfindungsgemäßen Laminates wird als Deckschicht ein z. B. durch Prägen strukturiertes Vlies eingesetzt, das in regelmäßigen oder unregelmäßigen Abständen eingeprägte Vertiefungen aufweist. Beim Vernadeln werden - rein statistisch - zumindest einige der beim Vernadeln durch die obere Vliesschicht gezogenen Faserbüschel auch durch diese Vertiefungen des oberen Vlieses gezogen, so dass sie mechanisch besser vor Abrasion geschützt sind. Auch hierdurch wird die Haltbarkeit des Endproduktes wesentlich verbessert.

Die Erfindung wird nachfolgend anhand eines Ausführungsbeispiels sowie der Zeichnung näher erläutert. Es zeigen dabei:
- Fig. 1: symbolisch einen Querschnitt durch ein erfindungsgemäßes Laminat;
- Fig. 2: symbolisch einen Querschnitt (Fig. 2a und b) bzw. eine Draufsicht (Fig. 2c) eines erfindungsgemäßen Laminats mit Prägungen;
- Fig. 3: symbolisch einen vergrößerten Querschnitt mit Prägungen.

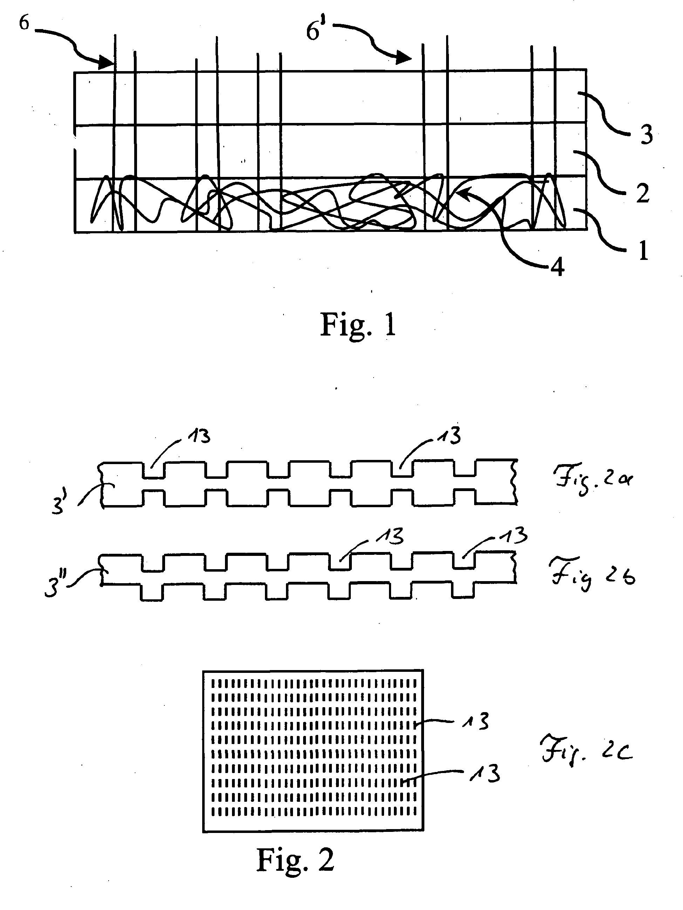

Figur 1 soll den Aufbau des erfindungsgemäßen Laminats mit unterem Vlies 1, elastischer Dämmschicht 2 und oberem Vlies 3 als Prinzipskizze erläutern. Das untere Vlies 1 enthält kohlenstoffhaltige, leitfähige Fasern 4, die durch den Vernadelungsprozess durch die elastische Dämmschicht 2 und das obere Vlies 3 gedrückt wurden und aus dessen Oberfläche ragen.

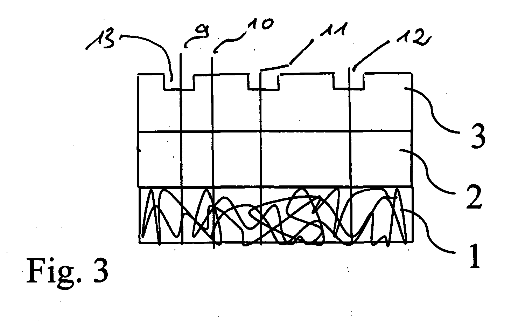

Durch den Vernadelungsprozess werden die kunststoffhaltigen Polymerfasern des unteren Vlieses 1 durch die elastische Dämmschicht und das obere Vlies 3 geführt und ragen dort zunächst aus der Oberfläche heraus. Eine bestimmte Länge der herausragenden Fasern ist zur Einstellung der Leitfähigkeit der Laminate nicht erforderlich. Die Fasern sind im Durchstoßpunkt des oberen Vlieses 3 beweglich und können so mechanischen Belastungen ausweichen (s. Fig. 3). Dies führt zu einer abrasionsstabilen elektrischen Verbindung zwischen oberem und unterem Vlies bzw. zwischen unterem Vlies und Objekten, die sich in Kontakt mit dem oberen Vlies befinden.

Die elektrische Leitfähigkeit der erfindungsgemäßen Laminate wird durch die kohlenstoffhaltigen Polymerfasern des unteren Vlieses erreicht. Das obere Vlies und die elastische Dämmschicht weisen vor der Vernadelung bevorzugt keine eigene elektrische Leitfähigkeit auf.

In einer anderen Variante der Erfindung kann das obere Vlies 3 mit einer eigenen elektrischen Leitfähigkeit durch Zugabe von elektrisch leitfähigen Fasern ausgestattet werden. Die elektrisch leitfähigen Fasern können aus Metallen wie Kupfer, Eisen, Edelstahl oder Messing, leitfähigen Polymeren (z. B. Polypyrrole) bestehen. Es ist ebenso möglich, dass das obere Vlies 3 die gleichen kohlenstoffhaltigen Polymerfasern wie das untere Vlies 1 enthält.

Die leitfähigen Vliese 1 und ggf. 3 enthalten für eine ausreichende elektrische Leitfähigkeit 0,1 bis 25 Gew.%, bevorzugt 1 bis 5 Gew.% der jeweiligen leitfähigen Materialien.

Für die Oberseite 3 der erfindungsgemäßen Laminate geeignete Vliese mit Kupferfasern sind unter der Bezeichnung "Cambrelle" der Fa. Camtex im Handel. Vliese mit kohlenstoffhaltigen Fasern, die als Unterseite der Laminate eingesetzt werden können, sind dem Fachmann im Bereich von elektrisch leitfähigen Fußbodenbelägen bekannt.

Bevorzugt weist das untere Vlies 1 ein Flächengewicht von 100 bis 250 g/m², insbesondere 150 bis 200 g/m² auf. Das obere Vlies 3 besitzt ein Flächengewicht von 50 - 200 g/m², bevorzugt 100 - 150 g /m².

Durch das Vernadeln des unteren Vlieses mit der elastischen Dämmschicht und des oberen Vlieses wird ein Material erhalten, bei dem zumindest ein Teil der kohlenstoffhaltigen Polymerfasern 6, 6' aus der Oberfläche des oberen Vlieses 3 herausragen (Fig. 1).

Die erfindungsgemäßen Laminate können insbesondere zur Herstellung von Einlegesohlen für Schuhe, ggf. aber auch als Bodenbelag, in Kfz- oder Flugzeug-Innenräumen, als Fußmatte oder als Wandbespannung verwendet werden.

In einer Variante der Erfindung weist das obere Vlies 1 Vertiefungen 13 auf, so dass ein Teil der leitfähigen Polymerfasern des unteren Vlieses 1 durch die Vertiefungen 13 des oberen Vlieses 3 genadelt wird und aus den Vertiefungen herausragt.

Diese Vertiefungen 13 können als Prägung oder anderweitig verdichtete Bereiche des Vlieses 3 ausgeführt sein. Vliese mit solchen Mustern sind kommerziell erhältlich und weisen auf einer oder beiden Seiten Vertiefungen auf. Fig. 2 zeigen als Prinzipskizze mögliche Querschnitte 3', 3'' eines solchen Materials. Die Vertiefungen werden durch Prägen bei erhöhter Temperatur erzeugt und weisen z. B. eine Länge von 1 - 5 mm, eine Breite von 0,1 bis 1 mm und einen Abstand von 1 - 5 mm auf. Die Prägungen können z. B. in Reihen angeordnet sein und auf beiden Seiten synchron (Fig. 2a, 3') oder asynchron (Fig. 2b, 3") ausgeführt sein.

Durch den Vernadelungsprozess werden die Fasern durch das obere Vlies 3 gedrückt und können dabei in (Fig. 3, Bezugszeichen 9, 11, 12) oder neben (Fig. 3, Bezugszeichen 10) den Vertiefungen 13 liegen. Werden die ggf. thermisch umgeformten erfindungsgemäßen Laminate unter abrasiven Bedingungen eingesetzt, z. B. als Einlegesohle, so werden die aus den Vertiefungen ragenden Fasern (Fig. 3, Bezugszeichen 9, 11, 12) weniger abgerieben als die aus der Oberfläche ragenden Fasern (Fig. 3, Bezugszeichen 10). Dies hat zur Folge, dass die Leitfähigkeit des Laminats bei Verwendung eines oberen Vlieses 3 mit Vertiefungen 13 sehr beständig gegen Abrasion ist.

Weiterhin können sich Fasern, die aus den Vertiefungen ragen, leichter mechanischem Druck anpassen (Fig. 3, Bezugszeichen 11), bzw. selbst bei einem Abreißen der Faser ragt noch ein geringer Teil der Fasern aus der Vliesoberfläche heraus und kann so eine ausreichende Ableitung von Oberflächenladungen des oberen Vlieses 3, ggf. unter Belastung gewährleisten (s. Fig. 3, Bezugszeichen 12).

Die erfindungsgemäßen Laminate können hergestellt werden, indem das untere Vlies, die elastische Dämmschicht und das obere Vlies aufeinander gelegt und von der Seite des unteren Vlieses aus miteinander vernadelt werden. Optional ist es möglich, vor dem Vernadelungsschritt das obere Vlies 3 und die elastische Dämmschicht 2 durch thermische Behandlung oder mit Hilfe eines Klebstoffs miteinander zu laminieren.

Die thermische Behandlung zur Laminierung der elastischen Dämmschicht 2 und des oberen Vlieses 3 kann als Beflammung, IR-Bestrahlung oder als Heißluftbehandlung in dem Fachmann bekannter Weise durchgeführt werden. Optional erfolgt die thermische Behandlung unter Anschmelzen der Dämmstoffoberseite, wobei im Gegensatz zu EP 0 862 373 B1 keine Versteifung des Laminats erfolgt, so dass die elastischen Eigenschaften des Polymerschaums erhalten bleiben. Als Kleber werden die dem Fachmann bekannten polymeren Schmelzkleber eingesetzt.

Die erfindungsgemäßen elektrisch leitfähigen Laminate können vor oder bevorzugt nach der thermischen Verformung konfektioniert werden. Dies ist in einfacher Weise durch Stanzen, Schneiden und/oder Abnähen der Kanten möglich.

## Patentansprüche

1. Elektrisch leitfähiges Laminat, umfassend
- eine erste Schicht (1), enthaltend elektrisch leitfähige Fasern (4),
- eine zweite Fasern enthaltende Schicht (3),
- eine zwischen der ersten und der zweiten Schicht angeordnete elastische Dämmschicht (2) aus thermoplastischem Kunststoff-Schaum,
wobei die erste Schicht (1) durch die elastische Dämmschicht (2) vernadelt ist, **dadurch gekennzeichnet,**
- **dass** die elastische Dämmschicht (2) aus vernetztem, geschlossenzelligem Polyolefinschaum besteht,
- **dass** die mittlere Vernadelungsdichte 20 - 50 Stiche pro cm² beträgt und
- **dass** elektrisch leitende Fasern (4) die elastische Dämmschicht (2) durchdringen.

2. Laminat nach Anspruch 1 in Form einer eklektisch leitfähigen Einlegesohle.

3. Laminat nach Anspruch 2, **dadurch gekennzeichnet, dass** die elastische Dämmschicht (2) die Form eines Fußbettes aufweist.

4. Laminat nach einem der Ansprüche 1 bis 3, **dadurch gekennzeichnet, dass** der vernetzte, geschlossenzellige Polyolefinschaum eine mittlere Zellgröße < 0,5 mm aufweist.

5. Laminat nach einem der Ansprüche 1 bis 4, **dadurch gekennzeichnet, dass** das die zweite Fasern enthaltende Schicht (3) kohlenstoffhaltige Polymerfasern, Metallfasern oder elektrisch leitfähige Polymere enthält.

6. Laminat nach Anspruch 1 bis 5, **dadurch gekennzeichnet, dass** es einen Durchgangswiderstand nach DIN EN 344-1 von 10⁴ - 10⁸ Ω besitzt.

7. Elektrisch leitfähiges Laminat nach einem der Ansprüche 1 bis 6, **dadurch gekennzeichnet, dass** die zweite Fasern enthaltende Schicht (3) als strukturiertes Vlies ausgebildet ist, das Vertiefungen aufweist, und dass ein Teil der leitfähigen Fasern der unteren faserhaltigen Schicht 1 durch die Vertiefungen des oberen Vlieses 3 verläuft.

8. Elektrisch leitfähiges Laminat nach einem der Ansprüche 1 bis 7, **dadurch gekennzeichnet, dass** der Anteil der geschlossenen Zellen im vernetzten, geschlossenzelligen Polyolefinschaum nach der Vernadelung mehr als 70% beträgt.

9. Verfahren zur Herstellung einer elektrisch leitfähigen Einlegesohle nach einem der Ansprüche 2 bis 8, **gekennzeichnet, durch** folgende Verfahrensschritte:
- Herstellen eines wenigstens dreischichtigen Laminats mit einer Mittelschicht (2) aus vernetztem, geschlossenzelligem Polyolefinschaum, einer Fasern enthaltenden Deckschicht (3) und einer elektrisch leitfähige Fasern (4) enthaltenden Unterschicht (1), wobei die Unterschicht (1) zumindest mit der Mittelschicht (2) vernadelt wird und wobei die mittlere Vernadelungsdichte 20 bis 50 Stiche pro cm² beträgt;
- Erwärmen des Laminats auf eine Temperatur, die eine thermoplastische Verformung der Mittelschicht (2) ermöglicht,
- Verpressen des erwärmten Laminats mit Matrize und Patrize derart, dass eine der gewünschten Form entsprechende bleibende Verformung bewirkt wird,
- Ausstanzen oder Ausschneiden der Einlegesohle aus dem verformten Laminat.

10. Verfahren nach Anspruch 9, **dadurch gekennzeichnet, dass** vor dem Vernadelungsschritt das obere Vlies (3) durch thermische Behandlung oder mittels Klebstoff auf die elastische Dämmschicht (2) laminiert wird.

## Claims

1. Electrically conductive laminate comprising
- a first layer (1), containing electrically conductive fibres (4),
- a second fibres-containing layer (3),
- an elastic insulant layer (2) composed of thermoplastic foam and disposed between the first and second layers,
the first layer (1) being needled through the elastic insulant layer (2), **characterized in that**
- the elastic insulant layer (2) consists of crosslinked, closed-cell polyolefin foam,
- the mean needling density is 20 - 50 stitches per cm², and
- electrically conducting fibres (4) penetrate through the elastic insulant layer (2).

2. Laminate according to Claim 1 in the form of an electrically conductive insole.

3. Laminate according to Claim 2, **characterized in that** the elastic insulant layer (2) has the shape of a footbed.

4. Laminate according to any one of Claims 1 to 3, **characterized in that** the crosslinked, closed-cell polyolefin foam has a mean cell size < 0.5 mm.

5. Laminate according to any one of Claims 1 to 4,
**characterized in that** the second fibres-containing layer (3) contains carbonaceous polymeric fibres, metallic fibres or electrically conductive polymers.

6. Laminate according to Claim 1 to 5, **characterized in that** it has a DIN EN 344-1 volume resistance of 10⁴ - 10⁸ Ω.

7. Electrically conductive laminate according to any one of Claims 1 to 6, **characterized in that** the second fibres-containing layer (3) is configured as a structured nonwoven having depressions, and **in that** a portion of the conductive fibres of the lower fibre-containing layer (1) extends through the depressions in the upper nonwoven 3.

8. Electrically conductive laminate according to any one of Claims 1 to 7, **characterized in that** the proportion of closed cells in the crosslinked, closed-cell polyolefin foam after needling is more than 70%.

9. Process for producing an electrically conductive insole according to any one of Claims 2 to 8, **characterized by** the following steps:
- producing an at least three-layered laminate having a middle layer (2) of crosslinked, closed-cell polyolefin foam, a top layer (3) containing fibres and a bottom layer (1) containing electrically conductive fibres (4), the bottom layer (1) being needled to the middle layer (2) at least, the mean needling density being in the range from 20 to 50 stitches per cm²;
- heating the laminate to a temperature sufficient to effectuate a thermoplastic forming of the middle layer (2),
- moulding the heated laminate with male and female moulds to effectuate a permanent forming corresponding to the desired shape,
- stamping or cutting the insole out of the formed laminate.

10. Process according to Claim 9, **characterized in that** prior to the needling step the upper nonwoven (3) is laminated onto the elastic insulant layer (2) by thermal treatment or by means of adhesive.

## Revendications

1. Stratifié électriquement conducteur, qui comprend :
- une première couche (1) qui contient des fibres électriquement conductrices (4),
- une deuxième couche (3) qui contient des fibres,
- une couche élastique d'amortissement (2) en mousse de matière synthétique thermoplastique disposée entre la première et la deuxième couche,
la première couche (1) étant aiguilletée à travers la couche élastique d'amortissement (2),
**caractérisé en ce que**
- la couche élastique d'amortissement (2) est constituée d'une mousse à cellules fermées de polyoléfine réticulée,
- **en ce que** la densité moyenne d'aiguilletage est de 20 à 50 piqûres par cm² et
- **en ce que** les fibres électriquement conductrices (4) traversent la couche élastique d'amortissement (2).

2. Stratifié selon la revendication 1, qui présente la forme d'une semelle intérieure électriquement conductrice.

3. Stratifié selon la revendication 2, **caractérisé en ce que** la couche élastique d'amortissement (2) présente la forme de la plante du pied.

4. Stratifié selon l'une des revendications 1 à 3, **caractérisé en ce que** la mousse à cellules fermées de polyoléfine réticulée a des cellules d'une taille moyenne < 0,5 mm.

5. Stratifié selon l'une des revendications 1 à 4, **caractérisé en ce que** la deuxième couche (3) qui contient des fibres contient des fibres polymères contenant du carbone, des fibres métalliques ou des polymères électriquement conducteurs.

6. Stratifié selon les revendications 1 à 5, **caractérisé en ce qu'**il présente une résistance au passage selon DIN EN 344-1 de 10⁴ à 10⁸ Ω.

7. Stratifié électriquement conducteur selon l'une des revendications 1 à 6, **caractérisé en ce que** la deuxième couche (3) qui contient des fibres est configurée comme feutre structuré qui présente des creux et **en ce qu'**une partie des fibres conductrices de la couche inférieure (1) qui contient des fibres s'étend dans les creux du feutre supérieur (3).

8. Stratifié électriquement conducteur selon l'une des revendications 1 à 7, **caractérisé en ce que** la proportion de cellules fermées dans la mousse à cellules fermées de polyoléfine réticulée est supérieure à 70 % après l'aiguilletage.

9. Procédé de fabrication d'une semelle intérieure électriquement conductrice selon l'une des revendications 2 à 8, **caractérisé par** les étapes qui consistent à :
- fabriquer un stratifié en au moins trois couches qui présentent une couche centrale (2) en une mousse à cellules fermées de polyoléfine réticulée, une couche de recouvrement (3) qui contient des fibres et une couche inférieure (1) qui contient des fibres électriquement conductrices (4), la couche inférieure (1) étant aiguilletée sur au moins la couche centrale (2) et la densité moyenne d'aiguilletage étant de 20 à 50 piqûres par cm²,
- chauffer le stratifié à une température qui permet une déformation thermoplastique de la couche centrale (2),
- comprimer le stratifié chauffé à l'aide d'une matrice et d'un poinçon de manière à obtenir une déformation permanente qui correspond à la forme souhaitée et
- estamper ou découper la semelle intérieure dans le stratifié déformé.

10. Procédé selon la revendication 9, **caractérisé en ce qu'**avant l'étape d'aiguilletage, le feutre supérieur (3) est stratifié par traitement thermique ou à l'aide d'un adhésif sur la couche élastique d'amortissement (2).
